Europäisches Patentamt

European Patent Office

Office européen des brevets

(11) Publication number: **0 596 268 A1**

## EUROPEAN PATENT APPLICATION

(21) Application number: **93116102.0**

(22) Date of filing: **05.10.93**

(51) Int. Cl.5: **B01D 53/22**, C01B 21/04

(30) Priority: **06.10.92 US 957297**

(43) Date of publication of application:
**11.05.94 Bulletin 94/19**

(84) Designated Contracting States:
**BE DE ES FR GB IT**

(71) Applicant: **PRAXAIR TECHNOLOGY, INC.**
**39 Old Ridgebury Road**
**Danbury, CT 06810-5113(US)**

(72) Inventor: **Gottzmann, Christian Friedrich**
**5308 Thompson Road**
**Clarence, New York 14031(US)**
Inventor: **Prasad, Ravi**
**12 Yardly Lane**
**East Amherst, New York 14051(US)**
Inventor: **Fay, Homer**
**347 Brantwood Road**
**Snyder, New York 14226(US)**

(74) Representative: **Schwan, Gerhard, Dipl.-Ing.**
**Elfenstrasse 32**
**D-81739 München (DE)**

(54) **Multiple purity membrane process.**

(57) Membrane systems having two or more processing stages are integrated so as to recover a high-purity product and one or more low-purity products.

Fig. 3A

## BACKGROUND OF THE INVENTION

### Field of the Invention

The invention relates to the production of nitrogen and other gases. More particularly, it relates to a membrane process for the production of multiple purity nitrogen products.

### Description of the Prior Art

In recent years, permeable membranes have been widely appreciated as a highly desirable means for producing nitrogen from feed air and for delivering other desirable gas separations. Because of their inherent simplicity of operation, membranes can be used to significantly reduce the cost of on-site systems for the production of relatively low purity, small tonnage nitrogen.

Very thin membrane barriers having a large surface area can be deposited on the surface of supporting substrates, conveniently in the form of hollow fibers. By a suitable disposition and assembly of such hollow fibers into bundles, permeation modules can be prepared for use in gas separation operations in which the feed gas flows at a relatively high pressure along either the outside, i.e., shell side, of the fibers or the inside, i.e. the bore side, thereof. The feed gas thus becomes progressively leaner in the more permeable components of the feed gas mixture, which selectively permeate through the membrane, and richer in the less permeable components thereof. The non-permeate is withdrawn from the module as a "retentate" stream, while the gas that selectively permeates the membrane flows along either the bore or shell side of the fibers and is withdrawn as a lower pressure "permeate" stream.

Most conventional hollow fiber modules operate in accordance with the so-called "crossflow" model described, for example, by C.Y. Pan and H.W. Habgood, Can. J. Chem. Eng. 56 (1978) pp. 197-209. In such crossflow operation, the composition of the local permeate at the surface of the membrane is considered not to mix with the bulk permeate gas stream. According to this model, the direction of permeate flow is inconsequential, and the permeate gas can be withdrawn from either end of the module. Since there is no beneficial effect of employing a permeate side purge stream in crossflow operation, most membranes designed for this type of operation employ three port membrane modules, i.e. incorporating feed gas inlet and retentate and permeate outlet ports.

If a composite or asymmetric hollow fiber membrane is made with a thin membrane layer positioned over a relatively high-porosity substrate, a permeator module that exhibits a high degree of desirable radial mixing on both sides of the membrane can be produced. By winding such hollow fibers in an ordered helical manner, such that all the fibers have an identical length, the permeator module is found to operate better than the predictions of the crossflow model. Such permeator modules follow the "cocurrent" or "countercurrent" permeation models, depending on the direction of permeate flow relative to retentate flow, with countercurrent flow generally resulting in superior performance. The passage of purge gas on the permeate side of the module is known to enhance membrane performance, and four port modules have been employed to enable purge gas to be introduced on the permeate side. The Prasad patent, U.S. 5,084,073, discloses such use of purge gas in gas drying or gas purification operations exhibiting a significant degree of countercurrency of performance.

In general, organic polymers suitable for membrane separation layers are more selective to oxygen permeation than to nitrogen. Thus, in permeator modules, the permeate becomes enriched in oxygen, whereas the retentate becomes enriched in nitrogen. The degree of separation is related to the ratio of the permeability coefficients of oxygen and nitrogen, referred to as the separation factor of oxygen/nitrogen. The $O_2/N_2$ separation factor for polymers typically is in the range of from 3 to 10. Unfortunately, however, most polymers having high separation factors also have relatively low permeabilities.

While permeation processes can be considered for producing either oxygen or nitrogen from air, processes for producing nitrogen on an economically feasible basis are generally more readily devised than are processes for oxygen production. As air is passed at high pressure along a membrane surface, more oxygen tends to permeate through the membrane than nitrogen. Thus, the gas stream on the feed side of the membrane becomes leaner in oxygen, and richer in nitrogen, as it passes along the membrane from the feed end to the discharge end thereof. By extending the length of the membrane, or by reducing the feed flow rate, the degree of purification of the nitrogen product can be increased, so that most of the oxygen can be removed in a single-stage membrane process to produce relatively pure nitrogen. Nitrogen purities of 90-97% can be produced economically in single-stage processing using currently available polymers. To achieve high purities, more of the nitrogen component of the feed air would need to be allowed to permeate the membrane, thus lowering the desired nitrogen recovery and commonly rendering the process uneconomical.

In two-stage membrane processing, the permeate gas from the second stage, which is rich in nitrogen relative to feed air, is recycled to the compressor passing feed gas to the first membrane stage. This richer feed to the first stage reduces the membrane surface area needed and increases the efficiency of the overall process. Two-stage membrane processing can be used to produce 97-99.5% nitrogen. Still higher nitrogen purities can be achieved by adding additional permeation stages. In a three-stage process, the third stage permeate is compressed and recycled to the feed to the second state. This approach reduces the mixing losses and permits the production of relatively pure, i.e. 99.5 + %, nitrogen. The number of permeation stages employed, and the processing scheme utilized, is dependent on the required purity of the nitrogen product desired and the selectivity of the membrane employed.

In certain practical commercial applications, the recovery of more than one product stream may be desirable. For example, both low and high purity nitrogen product streams, in different quantities, may be needed, or could be used, by some ultimate users of the nitrogen recovered from feed air. The conventional approach to satisfying such needs is to provide separate processing systems for each product stream. While each process system can be separately optimized using this approach, there is a genuine need and desire in the art to increase the efficiency of multiple purity nitrogen and other gas production operations.

It is an object of the invention, therefore, to provide an improved membrane process for the production of nitrogen.

It is a further object of the invention to provide a process for the enhanced production of nitrogen or other gases at multiple purity levels.

With these and other objects in mind, the invention is hereinafter described in detail, the novel features thereof being particularly pointed out in the appended claims.

## SUMMARY OF THE INVENTION

An integrated process is employed with the purest product is recovered as retentate from the last stage, with products of lesser purity being withdrawn as permeate from the last stage or from the streams between membrane stages. Multiple permeator modules are operated in parallel flow in many applications. Banks of modules are optimized to enhance the efficiency of producing various purity products. Equal or less membrane area and power are needed, or significantly lower, installed membrane costs are incurred, than for separate stand-alone process systems.

## BRIEF DESCRIPTION OF THE DRAWINGS

The invention is further described with references to the accompanying drawings in which:

**Fig. 1** is a schematic process flow diagram of a two-stage dual product embodiment of the invention;

**Fig. 2** is a schematic process flow diagram of an alternative two-stage dual product embodiment of the invention;

**Fig. 3A and 3B** are schematic process flow diagrams of a three-stage dual product embodiment of the invention;

**Fig. 4** is a schematic process flow diagram of a three-stage dual product embodiment of the invention, adopted for either series or parallel type recovery of products;

**Fig. 5** is a schematic process flow diagram of an integrated, two-stage, dual product embodiment of the invention employing banks of modules connected in parallel; and

**Fig. 6** is a schematic process flow diagram of an integrated, three stage, three product embodiment of the invention employing multiple banks of modules connected in parallel.

## DETAILED DESCRIPTION OF THE INVENTION

The objects of the invention are accomplished by the use of integrated permeation process embodiments that enable the required multiple purity products to be produced more efficiently and economically than in separate permeation processes for each described product. In an integrated two-stage process in which the second stage retentate is recovered as a high-purity nitrogen product, the permeate from the second stage can be compressed, if necessary, and recovered as a second product of lower purity than the retentate product. This process requires less membrane surface area, uses less power, and has considerably less installed cost than is required in the conventional separate processing for each desired product, wherein the permeate from the second stage is recycled to the feed to the first stage, more than making up for the absence of the recycle stream. In an alternative embodiment, the permeate gas from the second stage can be recycled to the feed compressor for passage to the first stage, with a low-purity nitrogen product being recovered as a side stream of the retentate passing from the first stage to the second stage of the system. In either case, the permeable gas from the first stage is conveniently discharged to waste. When the desired low-purity product is approximately the same as the composition of the stream passing from the first stage to the second stage, this alternative embodiment is particularly desirable since it requires no processing modification except for the providing for side stream withdrawal of the low-purity product from the high-pressure stream flowing from the first to the second stage.

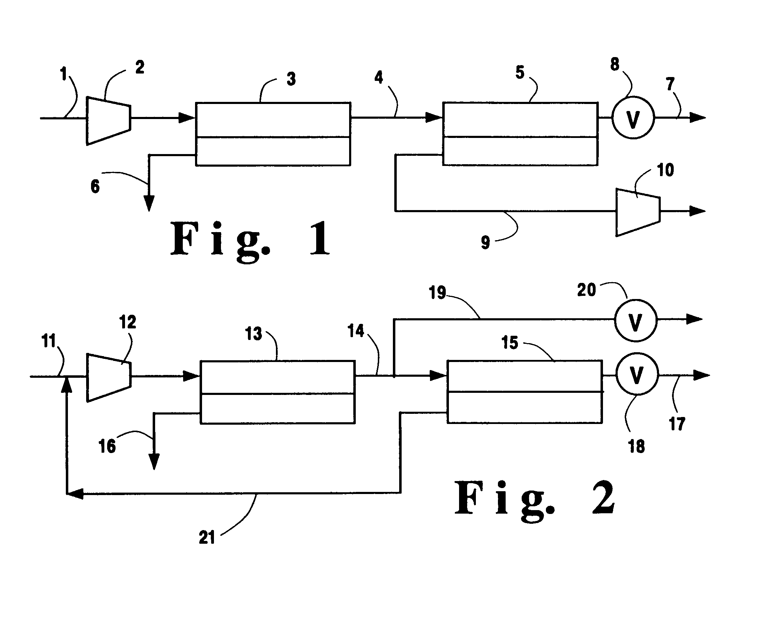

Such processing embodiments are illustrated in Figs. 1 and 2 of the drawing. As shown in Fig. 1, feed gas is passed in line 1 containing feed compressor 2 to first stage membrane module 3 of a two-stage membrane system from which retentate gas is passed in line 4 to second stage membrane 5. Permeate gas from first stage membrane module 3 is withdrawn from the system, generally as a waste stream, through line 6. Retentate gas from second stage membrane 5 is recovered in line 7, containing valve 8, as high-purity product gas. The permeate gas from second stage membrane module 5 is recovered in line 9 as a second product of lower purity than the product gas recovered in line 7, and can, if necessary be compressed in compressor 10.

In the Fig. 2 embodiment, feed gas is passed in line 11 containing feed compressor 12 to first stage membrane module 13 from which retentate gas is passed in line 14 to second stage membrane module 15. Permeate gas from first stage membrane module 13 is withdrawn from the system through line 16, as in the Fig. 1 embodiment. Retentate gas from second stage module 15 is likewise recovered in line 17, containing valve 18, as high-purity product gas. In this embodiment, a lower purity second product gas is recovered in line 19, containing valve 20, as a side stream of the retentate gas passing in line 14 from first stage membrane module 13 to second stage membrane module 15. In this embodiment, the permeate gas from second stage membrane module 15 is recycled in line 21 to line 11 upstream of compressor 12 for passage to said first stage membrane module 13.

It will be appreciated that the inter-stage composition is determined by the surface areas allocated to the two stages. This area allocation is usually set so that the second stage permeate is everywhere rich in nitrogen, relative to air, to obtain the maximum benefit of the recycled stream. Thus, the compositions of the high and low pressure streams flowing between the stages are coupled. If the membrane areas allocated to the two stages are fixed so that the beneficial effect of the recycled stream is optimized, the composition of the inter-stage, high-pressure stream is fixed, and it may or may not have the purity desired for the second product. Conversely, if the membrane surface areas are allocated to produce the desired composition of the second product in said inter-stage, high-pressure stream, then the recycle will not be optimized. Some adjustments in composition can be achieved by altering operating pressure, but the range of adjustment achievable in this fashion is limited.

In an embodiment of the invention that enables the product and recycle compositions to be decoupled, three membrane stages are employed and at least some of the modules are employed in a four-port configuration adapted to accept an external purge stream. In one approach, a high-purity product is recovered as the retentate from the third stage, and a low-purity product is received as a side-stream of the retentate stream flowing from the second to the third stage. Permeate gas from the third stage is recycled to the second stage for use as countercurrent permeate side purge therein, with the permeate gas withdrawn from the second stage being recycled to the feed line to the first stage upstream of the feed compressor. In an alternative of this approach, a side-stream of the retentate flowing from the first to the second stage can be recovered as a low-purity product. Permeable gas from the second stage is passed to the permeate side of the first stage to facilitate permeation therein, with the permeate stream from the first stage being discharged to waste. In this instance, third stage permeate gas is desirably recycled to the feed line to the first stage upstream of the feed compressor. It will be appreciated that the composition and the flowrate of the lower purity product can be determined by the membrane surface area allocation between the three stages. By such use of three stages, the surface area allocation appropriate for the recycle stream can be separately set independently of the desired composition and flowrate of the low-purity product.

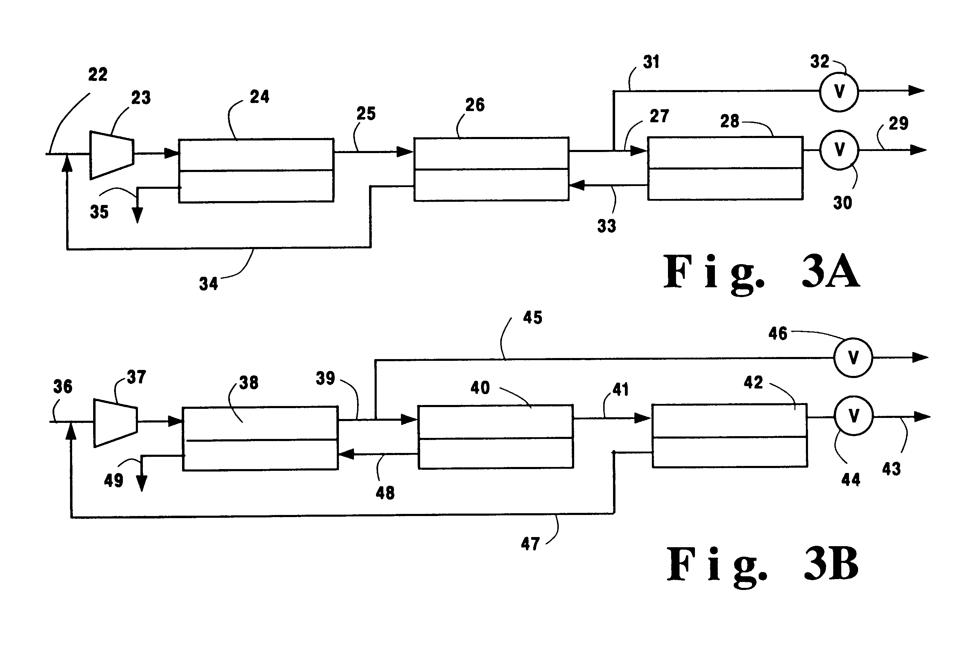

Such three membrane stage embodiments are illustrated in Figs. 3A and 3B of the drawings. In Fig. 3A, feed gas is passed in line 22 containing feed compressor 23 to first stage membrane module 24 from which retentate gas is passed in line 25 to second stage membrane module 26. Retentate gas from said module 26 is passed in line 27 to third stage membrane module 28, from which retentate gas is recovered in line 29, containing valve 30, as high purity product gas. A side stream of the retentate gas passing in line 27 from second stage membrane module 26 to third stage membrane module 28 is recovered in line 31, containing valve 32, as a lower purity second product gas. Permeate gas from said module 28 is recycled in line 33 to second stage membrane module 26 for use as purge gas on the permeate side thereof, and the permeate gas from said module 26 is recycled in line 34 to line 22 upstream of compressor 23 for passage to said first stage membrane module 24. Permeate gas from first stage membrane module 24 is discharged from the system through line 35.

In the Fig. 3B embodiment, feed gas is passed in line 36 containing feed compressor 37 to first stage membrane module 38 from which retentate gas is passed in line 39 to second stage membrane module 40. Retentate gas from said module 40 is passed in line 41 to third state membrane module 42, from which retentate gas is recovered in line 43, containing valve 44, as high purity product gas. A side stream of the retentate gas passing in line 39 from said first stage membrane module 38 to said second stage membrane module 40 is recovered in line 45, containing valve 46, as a lower purity second gas product. Permeate gas from third stage membrane module 42 is recycled in line 47 to line 36 upstream of compressor 37 for passage to said first stage membrane module 38. Permeate gas from second stage membrane module 40 is recycled in line 48 to first stage membrane module 38 for use as purge gas on the permeate side thereof. Permeate gas from said module 38 is discharged from the system in line 49.

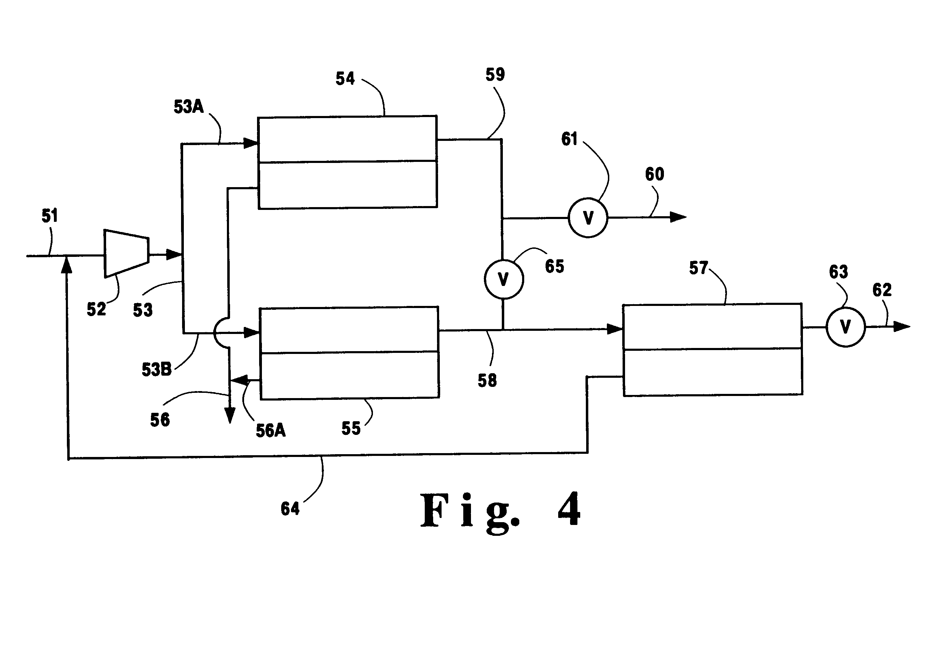

While the membrane permeators referred to above may comprise individual pieces of equipment, those skilled in the art will appreciate that, in all but the smallest production plants, multiple membrane modules connected in either series or parallel arrangements are generally needed to produce the quantity of products desired for a particular end product application. When the modules are connected in parallel, they can be joined in different ways. As shown in Fig. 4 of the drawings, the first stage comprises two membrane modules connected in parallel, with the first-stage retentate streams being joined. Thus, feed gas is passed in line 51 containing feed compressor 52 to line 53, containing line 53A for passage of the feed gas to module 54, and line 53B for passage of feed gas in parallel to module 55. Permeate gas from membrane 54 is discharged to waste through line 56, with permeate gas from membrane 55 being withdrawn through line 56A for discharge with the waste gas in line 56. Retentate from membrane 55 is passed to second stage membrane 57 through line 58, together with retentate withdrawn from membrane 54 through line 59. A side-stream of the retentate streams from membranes 54 and 55 can be recovered in line 60, containing valve 61, as low-purity product. High-purity product is obtained by the withdrawal of retentate gas from second-stage membrane 57 through line 62 containing valve 63. Permeate gas from said membrane 57 is recycled through line 64 to feed line 51 upstream of feed compressor 52.

In the dual-product process described above with respect to the Fig. 4 embodiment, the products are obtained in a series arrangement, with low-purity product being obtained from first stage membranes 54 and 55, and high-purity product being recovered from second stage membrane 57. In an alternative parallel arrangement, the retentate outputs of the first stages of the membranes are not joined. Thus, low-purity product is obtained from the membrane 54 retentate by passage, as before, through line 60. By closing valve 65 in line 59 to preclude the passage of membrane 54 retentate to line 58 and to preclude the passage of membrane 55 retentate to line 60, the retentate from membrane 54 is recovered in line 60 in parallel with the passage of retentate from membrane 55 in line 58 to second stage membrane 57 for recovery of high-purity product as retentate in line 62. It will be appreciated that, instead of so employing valve 65, the parallel arrangement can conveniently be employed by simply withdrawing low-purity product as the retentate from membrane 54 through line 59 without provision for the joining thereof with membrane 55 retentate passing in line 58 to second-stage membrane 57. Thus, no connection need exist between line 59 and line 58, and no valve 65 or separate line 60 and valve 61 need be employed, although line 60 and valve 61 may be retained for convenience in controlling product flow and stage cut. In this latter embodiment, the retentate streams from the two first stage modules may attain different compositions, and no coupling of the compositions is employed. Thus, the stage cut, i.e. the ratio of the permeate gas to feed gas, can be separately controlled in membrane 54, and the relative flow rates of the high and low-purity streams are independent of each other.

In the first described operation of the illustrated Fig. 4 embodiment in which the first-stage retentate streams are joined, minor flow and composition variations from the individual permeator modules are desirably smoothed out, although, as indicated above, the compositions are necessarily coupled and not subject to separate control as in the alternative version of the illustrated embodiment.

When the joined first stage retentate is very close in composition to the composition required for the lower purity product and when the amount of low-purity product is relatively small, the series arrangement, in which such retentate joining is employed, is preferable. If the desired lower purity composition departs appreciably from that of the joined first stage retentate, then the parallel arrangement, in which the first stage retentates are not joined, is preferable.

It is pointed out that the practice of the illustrated embodiment in which the first stage retentates are joined is analogous to another embodiment of the invention in which a dual product, integrated process is employed with the first stage comprising only a single membrane permeator unit instead of two or more such units adapted to operate in parallel with respect to the feed gas. In this case, the compressed feed

5

gas passes to a single unit first stage module, from which permeate is discarded to waste while the retentate passes to the second stage module. A portion of the retentate gas passing from the first to the second stage is diverted for recovery as low-purity product. Permeate gas from the second stage module is desirably recycled to the feed gas upstream of the feed compressor, and the retentate withdrawn from the second stage membrane is recovered as high-purity product.

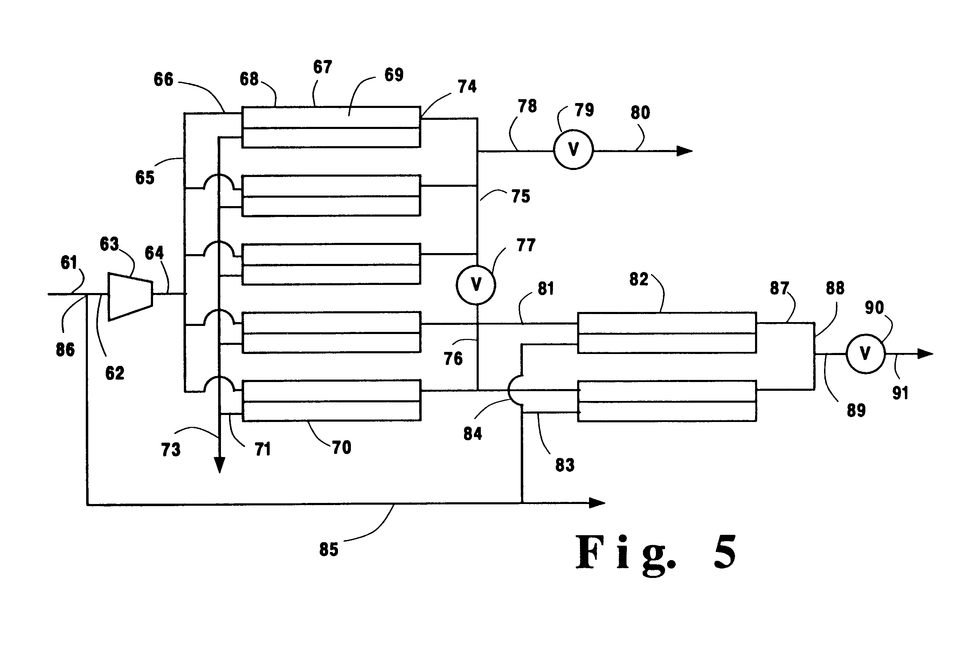

In most commercial applications, the product volumes are sufficiently large as to require many permeator modules to supply the total membrane surface area required. In such cases, banks of modules are connected in parallel and are connected to other parallel banks of modules, when such staging is needed to produce a high-purity product. A desirable arrangement for the production of products having two different purity levels is illustrated in Fig. 5 of the drawings. Input feed gas, e.g. feed air for illustrative purposes, enters the system through line 61 and, after blending with recycle gas as described below, passes through line 62 to the suction of compressor 63. The resulting compressed air, following cooling, if necessary, passes through line 64 to manifold 65 and then through a series of lines 66 to each of a bank 67 of first-stage permeator modules in which high pressure feed streams 68 flow along hollow-fiber membranes 69, with much of the oxygen in the feed air selectively permeating the membranes into low-pressure passage 70 and emerging through line 71 into manifold 72 for discharge as permeate waste through line 73. The retentate streams from first stage membranes 69 are discharged through line 74 into manifold 75 or manifold 76, which may or may not be connected through valve 77. The gas in manifold 75 passes through line 78 and flow control valve 79, and exits through line 80 as low-purity nitrogen product. The gas in manifold 76 passes through line 81 into second stage permeator modules 82. Such modules operate as described for the first stage modules, except that all gas streams are richer in nitrogen than air. The permeate from said second stage modules is withdrawn through lines 83 into manifold 84 and then through line 85, in which it is passed to blend with feed air at point 86 upstream of feed compressor 63. The second stage retentate passes through line 87 to manifold 88, and then through line 89 and flow control valve 90, for exit through line 91 as high-purity product. When valve 77 is opened, the overall process operates according to the series-type arrangement described above. When valve 77 is closed, the process operates pursuant to the parallel-type arrangement. Thus, the same processing equipment can readily be employed according to either mode of operation.

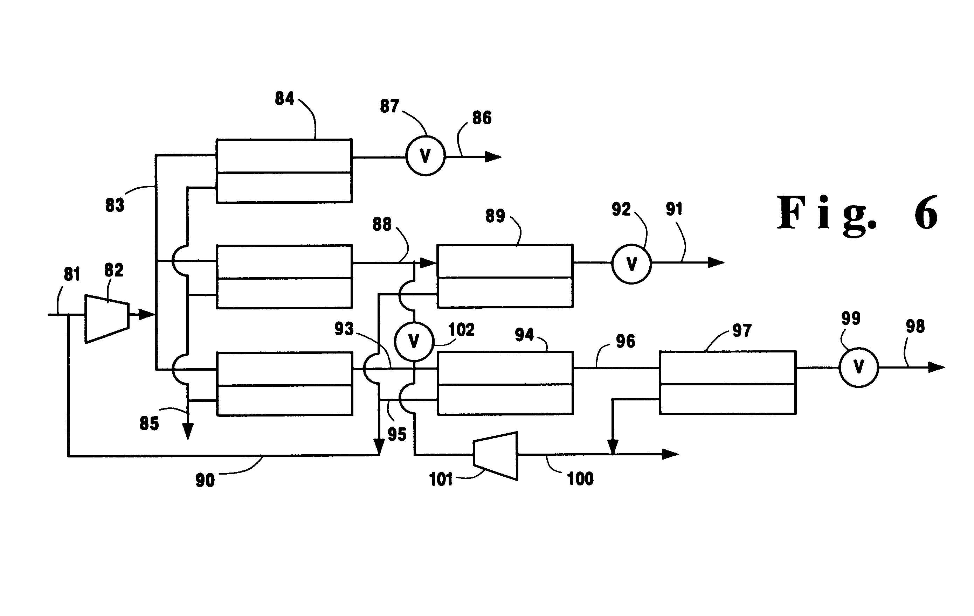

It will be understood that the practice of the invention is not limited to the use of two membrane stages, and that additional stages can be employed as needed, depending on the performance levels desired. A three-stage process for producing three products of differing purities is illustrated in Fig. 6 of the drawings. As shown therein, feed gas in line 81 containing feed compressor 82 passes to manifold 83 for passage to each first stage membrane module 84, from which permeate is discharged to waste through line 85. Each such module 84 may be either a single permeable module or multiple modules connected in parallel, as required by the desired volume of products. In the illustrated embodiment, the retentate from the top first stage module 84 is passed through line 86, containing control valve 87, for recovery as low-purity product. The retentate from intermediate first stage module 84 passes in line 88 to second stage membrane module 89, from which permeate is removed and passes in line 90 to line 81 upstream of feed compressor 82. The retentate from said second stage module 89 is recovered in line 91, containing control valve 92, as an intermediate-purity product.

The retentate from the bottom first stage module 84 passes in line 93 to second stage membrane module 94, from which permeate is removed and passes in line 95 to line 90 for recycle to the feed gas stream. The retentate from second stage membrane module 94 passes in line 96 to third stage membrane module 97, from which retentate gas is recovered in line 98, containing control valve 99, as high-purity product. Permeate from third-stage membrane 97 is recycled in line 100, containing gas compressor 101 and control valve 102, to line 93 for passage to second stage membrane module 84 and, optimally, to line 88 for passage to second stage membrane module 89.

The integrated processes of the invention have the advantages and economy of being positioned on a single foundation site with common utilities. Importantly, a single input feed compressor suffices. This is advantageous because only a single control system is required and, furthermore, a single multi-stage compressor can be considerably more energy efficient than two separate single-stage units. In addition, the practice of the integrated process of the invention, in some instances, requires less operating membrane surface area and operates with less power than in conventional separate system operations.

The invention is further described with reference to the accompanying examples of the practice thereof. Such examples will be understood to illustrate the invention, and the advantages thereof, and should not be construed as limiting the scope of the invention as set forth in the appended claims.

Example 1

In a comparative example related to the production of 10,000 NCFH of 99% nitrogen and 4,510 NCFH of 94.65% of nitrogen, a membrane with a separation factor of 5 and a permeability-thickness ratio of 3.16 x $10^5$ Barrers/cm. was employed in calculations according to the countercurrent model. The membrane surface area, total power and relative installed cost was determined using a conventional two-stage process and a single-stage process, and an integrated process in which the second stage membrane module retentate is recovered as high-purity, nitrogen-rich product. The permeate from said second stage membrane module operating in accordance with the countercurrent model is recovered as low-purity, nitrogen-rich product. The two-stage process recovers second stage retentate as product, with second stage permeate being recycled for passage with feed gas to the first stage membrane module. The results were as shown in Table I below:

TABLE I

|  | Total Area (sq.ft) | Total Power (kw) | Installed Cost (relative) |
|---|---|---|---|
| 1. Integrated Process of the Invention | 36,170 | 154.1 | 1.00 |
| 2. Two-Stage Conventional Process | 32,860 | 125.5 | 0.84 |
| 3. Single-Stage Conventional Process | 4,805 | 37.9 | 0.25 |
| 4. Total of Separate Processes | 37,665 | 163.4 | 1.09 |
| 5. (1) - (4) | -1,495 | -9.3 | -0.09 |

The example shows that the integrated process of the invention requires less membrane surface area, less total power and somewhat lower relative installed cost than in conventional processing using separate units for each product. The nature of the invention has the further advantage of avoiding unnecessary duplication of equipment and utilities.

EXAMPLE 2

In this example directed to the production of 10,000 NCFH of 99% nitrogen and 4,000 NCFH of 93% nitrogen, the low-purity product is taken from the high-pressure line between module stages, rather than from the second stage permeate gas. Using the membrane characteristics of Example 1, the results were as shown in Table II below:

TABLE II

|  | Total Area (sq.ft) | Total Power (kw) | Installed Cost (relative) |
|---|---|---|---|
| 1. Integrated Process of the Invention | 36,710 | 151.9 | 1.00 |
| 2. Two-Stage Conventional Process | 32,860 | 125.5 | 0.91 |
| 3. Single-Stage Conventional Process | 3,760 | 31.5 | 0.25 |
| 4. Total of Separate Conventional Processes | 36,620 | 157.0 | 1.16 |
| 5. (1) - (4) | + 90 | -5.1 | -0.16 |

In this example, the integrated process of the invention requires slightly more membrane surface area, but uses somewhat less power than in the operation of separate processes in accordance with conventional nature. The differences are, however, quite small. The large and significant effect is in the installed cost of the membrane systems. As shown above, the separate processes of the conventional approach cost 16% more than the installed cost of the integrated process of the invention.

EXAMPLE 3

For the production of 10,000 NCFH of 99% nitrogen and 5,000 NCFH of 96% nitrogen, the conventional approach of separate processes was compared with the integrated process as illustrated in Fig. 2, using the membrane characteristics of Example #1 and based on the crossflow permeation model. The results are as shown in Table III.

TABLE III

| | Total Area (sq.ft) | Total Power (kw) | Installed Cost (relative) |
|---|---|---|---|
| 1. Integrated Process of the Invention | 50,985 | 191.9 | 1.00 |
| 2. Two-Stage Conventional Process | 41,640 | 146.9 | 0.83 |
| 3. Single-Stage Conventional Process | 9,225 | 54.3 | 0.28 |
| 4. Total of Separate Conventional Processes | 50,865 | 201.2 | 1.11 |
| 5. (1) - (4) | + 120 | -9.3 | -0.11 |

As in Example 2, the integrated process of the invention requires slightly more membrane surface area, and uses slightly less power than is required in the use of separate processes in the conventional approach. However, the installed costs of the separate processes are 11% higher than for the practice of the invention. A single-stage compressor was used in the single-stage process, appropriately in light of the specified level of gas flow. The two-stage process and the integrated process were based on the use of more efficient two-stage compressors. This increased efficiency accounts for the superior energy efficiency of the integrated process.

Various changes and modifications can be made in the details of the invention without departing from the scope of the invention as set forth in the appended claims. While the illustrative examples pertain to the production of dual products of different purity, the invention can be used for the production of three or more products of different purity levels. While both products were produced at the same high pressure used in the operation of the permeation stages in the operation of Examples 2 and 3 above, the lower-purity product, in some applications, is required at lower pressure than that required for the high purity product. It is within the scope of the invention to operate the permeation stages at different pressures, as by incorporating inter-stage compression. This obviates the need to compress all of the gas to the higher pressure and can thus contribute to more economical overall processing.

The membrane material may be any suitable material capable of selectively permeating oxygen from air or selectively permeating one component of a gas mixture, as in the drying of air to produce air at different moisture levels. Composite hollow fiber membranes suitable for use in the practice of the invention are conveniently prepared using polysulfone or other desired substrates and a separation layer of a suitable material, such as ethyl cellulose, cellulose acetate or other such material. Asymmetric membranes comprised of materials such as cellulose, polysulfone and the like may also be employed. It will be appreciated that a variety of other suitable materials available in the art can be used in the practice of the invention, either as the substrate or separation layer material of composite membranes, or as the material used in asymmetric form. The hollow fibers of such materials can be spun in accordance with procedures well known in the membrane art. It will be understood that feed gas may be passed either to the bores of hollow fibers, for inside-out flow, or to the shell side of the membrane for outside-in flow.

The invention advances the membrane art by providing a process for the production of dual or multiple purity membrane products. By enabling overall efficiencies to be achieved in the production of nitrogen and other gas products are different purity levels, the invention enhances the feasibility of employing highly desirable membrane systems to satisfy the ever-growing gas separation and purification requirements of industrial societies.

## Claims

1.  An improved process for the production of product gas at more than one purity comprising:
    (a) passing a feed gas stream to a first membrane stage of a membrane system containing at least two membrane stages for the selective permeation of a more permeable component thereof;
    (b) withdrawing a permeate stream comprising the more permeable component from said first membrane stage for discharge from the membrane system;
    (c) passing a retentate stream comprising a less permeable component of the feed gas stream from said first membrane stage to subsequent membrane stages for purification thereof;
    (d) recovering a retentate stream from the last membrane stage of the membrane system as a high-purity product;
    (e) withdrawing a permeate stream from the last membrane stage of the membrane system; and
    (f) recovering said permeate stream from the last membrane stage or a portion of the retentate stream passing as feed gas to said last membrane stage as a low-purity product,
    whereby different purity product streams are efficiently recovered from a feed gas stream in a single,

8

integrated process.

2. The process of Claim 1 in which the low-purity product is obtained by recovering said permeate stream from the last membrane stage.

3. The process of Claim 1 in which the low-purity product is obtained by recovering a portion of the retentate stream passing as feed gas to said last membrane stage.

4. The process of Claim 3 and including recycling the permeate stream from the last membrane stage to an earlier stage of the membrane system.

5. The process of Claim 1 in which the feed gas stream comprises feed air, and the high-purity product and low-purity product comprise nitrogen-rich streams.

6. The process of Claim 1 in which said membrane system contains three membrane stages.

7. The process of Claim 6 in which the feed gas stream comprises feed air, and the high-purity product and low-purity product comprises nitrogen-rich streams.

8. The process of Claim 6 in which the low-purity product is obtained by recovering a portion of the retentate stream passing to said last membrane stage.

9. An improved process for the production of product gas at more than one purity comprising:
   (a) passing a feed gas stream to a membrane system containing at least two membrane stages for the selective permeation of a more permeable component thereof;
   (b) recovering a retentate stream comprising the less permeable component to the feed gas stream from the last membrane stage of the membrane system as a high-purity product;
   (c) recycling a permeate stream from the last permeate stage to an earlier stage of the membrane system; and
   (d) recovering a retentate stream from a membrane stage other than the last membrane stage of the membrane system as a low-purity product.

10. The process of Claim 9 in which said membrane system contains three membrane stages.

11. The process of Claim 10 in which the retentate stream recovered as a low-purity product comprises a portion of the retentate stream passing from the second to the third membrane stage.

12. The process of Claim 10 in which the retentate stream recovered as a low-purity product comprises a portion of the retentate stream passing from the first to the second membrane stage.

13. The process of Claim 11 in which permeate gas from the third stage is passed to the second stage, and that from the second stage is recycled to the feed gas stream.

14. The process of Claim 10 in which said membrane system contains two membrane stages and in which the first stage comprises at least two membrane modules, in which the retentate stream recovered as low-purity product comprises retentate from at least one of said first stage membrane modules, with retentate from at least one of said first stage membrane modules being passed separately to said second stage.

15. The process of Claim 10 in which the first stage comprises at least three membrane modules, the retentate stream from at least one membrane module being recovered as a low-purity product; the second stage comprising at least two membrane modules, a portion of the retentate stream from said second stage membrane modules being recovered as an intermediate-purity product and another portion of the retentate stream from said second stage membrane modules being passed to the third stage; the retentate stream from the third stage being recovered as a high-purity product.

16. The process of Claim 15 in which the permeate from the third stage is recycled to the second stage, and the permeate from the second stage is recycled to the feed gas stream for passage to said first stage.

17. The process of Claim 11 in which the permeate from the third stage is passed as purge gas to the permeate side of the second stage, and the permeate from the second stage is passed to the feed gas stream passing to the first stage.

18. The process of Claim 12 and including recycling permeate from the third stage to the feed gas stream for passage to the first stage, the permeate from the second stage passing to the permeate side of the first stage as purge gas, and the permeate gas from the first stage being discharged from the membrane system.

19. The process of Claim 14 in which retentate from at least one of said first stage membrane modules is separately recovered as low-purity product, and the retentate gas from at least one other of said first stage membrane modules is separately passed to said second stage.

20. The process of Claim 15 in which the retentate stream from at least one of said second stage membrane modules is recovered separately as an intermediate-purity product, and the retentate stream from at least one other of said second membrane modules is separately passed to the third stage.

21. The process of Claim 19 in which said first stage comprises four membrane modules, the retentate from two of the first stage membrane modules being separately recovered as low-purity product, the retentate from the other two of the membrane modules being separately passed to said second stage.

22. The process of Claim 20 in which the first stage comprises at least three membrane modules, the retentate from one of said first stage membrane modules being recovered separately as a low-purity product.

23. The process of Claim 22 in which the first stage comprises three membrane modules, the retentate from two of said first stage modules being separately passed to the second stage.

Fig. 1

Fig. 2

EP 0 596 268 A1

Fig. 3A

Fig. 3B

EP 0 596 268 A1

Fig. 4

EP 0 596 268 A1

Fig. 5

Fig. 6

EP 0 596 268 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 377 424 (PERMEA INC.) <br> * figure 1 * <br> --- | 1,2,5 | B01D53/22 <br> C01B21/04 |
| A | EP-A-0 412 663 (A/G TECHNOLOGY CORP.) <br><br> * figures 3-5 * <br> --- | 1,2,4,5, 9 | |
| A | GB-A-2 005 152 (RAVIER) <br> * figures 2-5 * <br> --- | 1-3,5,9 | |
| A | US-A-5 006 132 (AIR PRODUCTS AND CHEMICALS) <br> * claims 1-27; figures 1,2 * <br> ----- | 1 | |
| | | | **TECHNICAL FIELDS SEARCHED (Int.Cl.5)** <br><br> B01D <br> C01B |

The present search report has been drawn up for all claims

| Place of search | Date of completion of the search | Examiner |
|---|---|---|
| THE HAGUE | 22 February 1994 | Eijkenboom, A |

EPO FORM 1503 03.82 (P04C01)